# EUROPÄISCHE PATENTSCHRIFT

(11) **EP 4 406 398 B1**
(45) Veröffentlichungstag und Bekanntmachung des Hinweises auf die Patenterteilung: **14.01.2026**
(21) Anmeldenummer: 23212652.4
(22) Anmeldetag: 28.11.2023
(51) Int. Cl.: A01D 41/02, F01P 11/12, A01D 41/12

(54) **SELBSTFAHRENDE ERNTEMASCHINE**
SELF-PROPELLED HARVESTER
MOISSONNEUSE AUTOMOTRICE

(30) Priorität: 26.01.2023 DE 102023101870
(43) Veröffentlichungstag der Anmeldung: 31.07.2024
(73) Patentinhaber: CLAAS Selbstfahrende Erntemaschinen GmbH, 33428 Harsewinkel (DE)
(72) Erfinder: Renneke, Elmar, 33129 Delbrück (DE); Vorwerk, Norbert, 49078 Osnabrück (DE); Thies, Sören, 33442 Herzebrock-Clarholz (DE)
(74) Vertreter: CLAAS Gruppe

(56) Entgegenhaltungen:
- EP-A1- 0 667 447
- EP-A1- 1 035 308
- DE-A1- 10 225 090

## Beschreibung

Die vorliegende Anmeldung betrifft eine selbstfahrende Erntemaschine gemäß dem Oberbegriff von Anspruch 1.

Die Erntemaschine, die insbesondere in Form eines Feldhäckslers ausgebildet sein kann, umfasst einen Antriebsmotor, der typischerweise von einer Verbrennungskraftmaschine gebildet ist. Der Antriebsmotor dient unter anderem dazu, mindestens ein Arbeitsorgan der Erntemaschine zu betreiben sowie für einen Vortrieb der Erntemaschine auf einem Untergrund zu sorgen. Hierzu umfasst die Erntemaschine ferner eine Mehrzahl von Rädern, die jeweils in einem zugehörigen Radkasten angeordnet sind. In aller Regel sind mindestens zwei der Räder drehantreibbar, wobei ein an den Rädern wirkendes Drehmoment zumindest mittelbar mittels des Antriebsmotors bereitgestellt wird.

Der Antriebsmotor entwickelt während eines Betriebs der Erntemaschine Abwärme, die abgeführt werden muss. Daher umfasst die Erntemaschine ferner ein Kühlsystem zur Kühlung des Antriebsmotors. Das Kühlsystem umfasst wiederum einen Kühlkörper, der beispielsweise eine Vielzahl von Kühllamellen aufweisen kann, und einen Kühlventilator zur Erzeugung eines Kühlluftstroms. Der Kühlventilator ist derart relativ zu dem Kühlkörper angeordnet, dass der mittels des Kühlventilators erzeugte Kühlluftstrom entlang des Kühlkörpers strömt und/oder den Kühlkörper durchströmt. Insbesondere kann der Kühlventilator an einem Gehäuse des Kühlsystems angeordnet sein, innerhalb dessen der Kühlkörper gelagert ist.

Das Kühlsystem umfasst ferner eine Siebeinrichtung, die dem Kühlkörper vorgeordnet ist. Die Siebeinrichtung ist dazu vorgesehen und eingerichtet, in dem Kühlluftstrom mitgeführte Schmutzpartikel zurückzuhalten und auf diese Weise an einer Weiterleitung zu dem Antriebsmotor zu hindern. Eine solche Siebeinrichtung hat ferner den Vorteil, dass die Schmutzpartikel von dem Kühlkörper ferngehalten werden. Hierzu umfasst die Siebeinrichtung eine Siebfläche, die beispielsweise von einem Siebelement in Form eines engmaschigen Siebgitters gebildet sein kann. Im Zuge des Betriebs des Kühlsystems lagern sich an dem Siebelement sukzessive Schmutzpartikel ab.

Entsprechend ist es erforderlich, die Siebeinrichtung fortwährend abzureinigen. Hierzu umfasst das Kühlsystem ferner eine Reinigungsvorrichtung, die ein Gebläse zur Erzeugung eines Reinigungsluftstroms sowie einen mit dem Gebläse strömungstechnisch verbundenen Reinigungskopf umfasst. Der Reinigungskopf ist der Siebfläche der Siebeinrichtung zugeordnet und derart nah an der Siebfläche angeordnet, dass mittels des Reinigungsluftstroms Schmutzpartikel von der Siebfläche ablösbar sind bzw. abgelöst werden. Diese Schmutzpartikel werden mittels des Reinigungsluftstroms sodann in den Reinigungskopf eingeleitet und auf diese Weise von der Siebfläche abgeführt. Hierzu kann der Reinigungskopf beispielsweise mit einer Reinigungsleitung zusammenwirken, in die die Schmutzpartikel ausgehend von dem Reinigungskopf eintreten und mittels der die Schmutzpartikel in Richtung des Gebläses abtransportiert werden.

In aller Regel ist die Siebeinrichtung derart ausgeführt, dass die Siebfläche bzw. ein die Siebfläche definierendes Siebelement fortwährend um eine Drehachse rotiert wird, während der nah an der Siebfläche angeordnete Reinigungskopf stationär an einer Stelle verbleibt. Auf diese Weise ist es besonders einfach möglich, zumindest im Wesentlichen jede Stelle der Siebfläche zyklisch an dem Reinigungskopf entlang zu führen, so das der an dem Reinigungskopf wirkende Reinigungsluftstrom jeweilige Schmutzpartikel erfassen und abtransportieren kann. Auf diese Weise ist es besonders einfach möglich, die Siebfläche insgesamt zu reinigen, ohne dass der Reinigungskopf als solcher entlang der Siebfläche bewegt werden muss.

Eine Erntemaschine der vorstehend beschriebenen Art ist im Stand der Technik bereits bekannt. Hierzu wird auf die europäische Patentanmeldung 0 667 447 A1 hingewiesen. Diese beschreibt ebenfalls eine selbstfahrende Erntemaschine, die über ein Kühlsystem mit einer Siebeinrichtung und einer Reinigungsvorrichtung verfügt. Entsprechend der vorstehenden Erläuterung verfügt die Reinigungsvorrichtung über einen Reinigungskopf, der mit einem Bereich einer Siebfläche der Siebeinrichtung zusammenwirkt, wobei infolge einer Bewegung des die Siebfläche definierenden Siebelements während eines Betriebs der Erntemaschine der mit dem Reinigungskopf zusammenwirkende Bereich der Siebfläche fortwährend verändert wird, sodass effektiv die gesamte Siebfläche mittels des Reinigungskopfs bearbeitbar ist.

Die an dem Reinigungskopf erfassten Schmutzpartikel werden mittels einer Reinigungsleitung einem Auswurfkanal der als Feldhäcksler ausgebildeten Erntemaschine zugeführt. In dem Auswurfkanal ist ein Nachbeschleuniger angeordnet, der als Gebläse für die Reinigungsvorrichtung wirkt und auf diese Weise den gewünschten Reinigungsluftstrom erzeugt.

Die bekannte Ausgestaltung hat den Nachteil, dass die Reinigungsvorrichtung lediglich während eines Erntevorgangs betrieben werden kann. In jedem Fall ist ein Betrieb der Reinigungsvorrichtung während einer Straßenfahrt der Erntemaschine nicht möglich, da die Einleitung von Schmutzpartikeln in den Auswurfkanal nicht erfolgen kann. Die Reinigung der Siebeinrichtung ist mithin auf Zeiträume beschränkt, in denen die Erntemaschine im Rahmen eines Erntevorgangs verwendet wird.

Der vorliegenden Anmeldung liegt mithin die Aufgabe zugrunde, eine Erntemaschine bereitzustellen, bei der eine Reinigung der Siebeinrichtung flexibler möglich ist.

Die zugrunde liegende Aufgabe wird erfindungsgemäß mittels einer Erntemaschine mit den Merkmalen des Anspruchs 1 gelöst. Vorteilhafte Ausgestaltungen ergeben sich aus den zugehörigen Unteransprüchen.

Die Erntemaschine ist dadurch gekennzeichnet, dass die Reinigungsvorrichtung eine Abluftleitung umfasst, die dazu eingerichtet und vorgesehen ist, den mit abgelösten Schmutzpartikeln beladenen Reinigungsluftstrom in einen der Radkästen zu leiten. Beispielsweise kann die Reinigungsvorrichtung eine Reinigungsleitung umfassen, die sich von dem Reinigungskopf bis zu dem Gebläse erstreckt, wobei sich anschließend an das Gebläse die Abluftleitung erstreckt, die ausgehend von dem Gebläse hin zu einem bzw. in einen der Radkästen führt. Bei einer solchen Ausgestaltung kann das Gebläse bevorzugt von einem Sauggebläse gebildet sein, das eine Saugseite und eine Druckseite aufweist. Diese Ausgestaltung ist nachstehend gesondert erläutert.

Die erfindungsgemäße Erntemaschine hat viele Vorteile. Indem der Reinigungsluftstrom zu einem der Radkästen geleitet wird, anstatt ihn einem Arbeitsorgan, beispielsweise in der bekannten Weise einem Auswurfkanal, zuzuführen, kann die Reinigungsvorrichtung unabhängig von einem Betriebszustand der Erntemaschine betrieben werden. Insbesondere kann die Reinigungsvorrichtung auch während einer Straßenfahrt der Erntemaschine betrieben werden, wobei die an der Siebeinrichtung abgelösten Schmutzpartikel mittels des Reinigungsluftstroms in den Radkasten geleitet werden.

In bevorzugter Weise kann ein Austrittsquerschnitt der Abluftleitung, durch den der Reinigungsluftstrom aus der Abluftleitung austritt, derart orientiert sein, dass der Reinigungsluftstrom unmittelbar auf das in dem Radkasten befindliche Rad gerichtet ist. Auf diese Weise werden die Schmutzpartikel "gebremst", indem sie auf eine Oberfläche des Rades prallen. Hierdurch wird der Bildung einer Staubwolke im Bereich des Radkastens vorgebeugt. Die kinetische Energie der Schmutzpartikel ist dabei aufgrund der sehr geringen Masse derart gering, dass auch bei einer dauerhaften "Bestrahlung" der Oberfläche des Rades keine Beschädigung des letzteren zu befürchten ist. Im Übrigen stellen die von der Siebeinrichtung abgeführten Schmutzpartikel auch im Straßenverkehr keine nennenswerte zusätzliche Umweltbelastung dar, die sich negativ auf andere Verkehrsteilnehmer oder den Zustand der jeweils befahrenen Straße auswirken kann.

In einer bevorzugten Ausführungsform endet die Abluftleitung in unmittelbarer Nähe oberhalb eines Kotflügels des Radkastens, wobei der Kotflügel eine der Abluftleitung örtlich zugeordnete Aussparung aufweist. Die Aussparung ist bevorzugt derart ausgebildet, dass ein durch sie gebildeter Querschnitt zumindest im Wesentlichen einem Austrittsquerschnitt der Abluftleitung entspricht. Auf diese Weise kann der aus dem Austrittsquerschnitt der Abluftleitung austretende Reinigungsluftstrom durch die Aussparung hindurch in den Radkasten einströmen. Diese Ausgestaltung hat den besonderen Vorteil, dass der Radkasten als solcher unabhängig von der Abluftleitung ist.

Entsprechend ist es besonders von Vorteil, wenn der Kotflügel unabhängig von der Abluftleitung demontierbar ist, wobei die Abluftleitung getrennt von dem Kotflügel ausgebildet ist. Bei dieser Ausgestaltung wird die Abluftleitung von einer Demontage des Kotflügels nicht tangiert. Umgekehrt ist es ebenso möglich, die Abluftleitung zu reparieren oder zu tauschen, ohne dass hierfür ein Eingriff an dem Kotflügel, beispielsweise eine Demontage desselben, erforderlich ist.

Wie vorstehend bereits dargelegt, ist es besonders vorteilhaft, wenn das Gebläse der Reinigungsvorrichtung von einem Sauggebläse gebildet ist. Bei dieser Ausgestaltung ist bevorzugt der Reinigungskopf einer Saugseite des Gebläses zugeordnet, sodass mittels der Reinigungsvorrichtung Schmutzpartikel von der Siebfläche der Siebeinrichtung absaugbar sind. Mit anderen Worten werden die Schmutzpartikel unter Einwirkung des Reinigungsluftstroms an dem Reinigungskopf "eingesaugt". Ferner ist die Reinigungsvorrichtung bei dieser Ausgestaltung derart ausgebildet, dass die Abluftleitung an eine Druckseite des Gebläses angeschlossen ist. Entsprechend werden die Schmutzpartikel ausgehend von dem Reinigungskopf durch eine Reinigungsleitung zu dem Gebläse gesaugt und ausgehend von dem Gebläse mittels desselben durch die Abluftleitung abgegeben. Auf diese Weise ist besonders einfach ein gerichteter Reinigungsluftstrom erzeugbar.

In einer weiterhin vorteilhaften Ausgestaltung kann der Reinigungskopf eine langgestreckte Form aufweisen. Diese Ausführungsform ist insbesondere mit einem als Sauggebläse ausgebildeten Gebläse sinnvoll, wobei der Reinigungskopf mit seiner langgestreckten Form an der Siebfläche eine Wirkungsfläche ausbilden kann, an der entlang einer Gesamtlänge des Reinigungskopfs Schmutzpartikel von der Siebfläche absaugbar sind. In bevorzugter Ausführungsform ist der Reinigungskopf mittels einer Reinigungsleitung strömungstechnisch mit dem Gebläse verbunden, wobei die Reinigungsleitung - bezogen auf eine Längsachse des Reinigungskopfs - mittig an selbigen angeschlossen ist. Diese Ausgestaltung hat den Vorteil, dass sich eine Saugleistung des Reinigungsluftstroms möglichst gleichmäßig entlang einer Wirkungsfläche des Reinigungskopfs verteilt.

Weiterhin kann eine solche Ausgestaltung der Erntemaschine besonders vorteilhaft sein, bei der zumindest die Siebfläche der Siebeinrichtung um eine Drehachse drehantreibbar ausgebildet ist, wobei der Reinigungskopf derart feststehend nah an der Siebfläche angeordnet ist, dass im Zuge eines Drehantriebs der Siebfläche der Reinigungskopf zumindest im Wesentlichen mit der gesamten Siebfläche der Siebeinrichtung in Wirkeingriff gerät. Die Möglichkeit für eine entsprechende Ausgestaltung ist eingangs bereits dargelegt worden. Der Vorteil ist darin zu sehen, dass der Reinigungskopf als solcher stationär an der Siebeinrichtung angeordnet werden kann, ohne dass er die gesamte Siebfläche überdecken muss. Eine vollständige Überdeckung ist nicht praktikabel, da ansonsten der Kühlluftstrom die Siebfläche nicht passieren könnte. Entsprechend ist entweder eine sukzessive Bewegung eines Reinigungskopfs entlang der Siebfläche oder umgekehrt die hier beschriebene Variante eine sich bewegenden Siebfläche bei feststehendem Reinigungskopf erforderlich, um die Siebfläche fortwährend von Schmutzpartikeln zu befreien und auf diese Weise das Kühlsystem dauerhaft betreiben zu können.

In besonders bevorzugter Weise ist der Reinigungskopf bei der beschriebenen Ausgestaltung, bei der zumindest die Siebfläche der Siebeinrichtung drehangetrieben wird, in der vorstehend beschriebenen Weise langgestreckt ausgebildet. In dieser Kombination ist es besonders vorteilhaft, wenn sich die Längsachse des Reinigungskopfs zumindest im Wesentlichen in radiale Richtung bezogen auf die Drehachse der Siebfläche erstreckt, wobei eine Länge des Reinigungskopfs bevorzugt zumindest im Wesentlichen einem Radius der Siebfläche entspricht. Bei dieser Ausgestaltung überdeckt der Reinigungskopf die Siebfläche entlang einer "Linie" über den gesamten Radius der Siebfläche, wobei infolge des Drehantriebs der Siebfläche während eines Betriebs der Erntemaschine - und mithin während eines Drehantriebs der Siebfläche - zyklisch die gesamte Fläche der Siebfläche erfasst und mittels der Reinigungsvorrichtung abgereinigt wird. Bei einer solchen Ausgestaltung ist es besonders vorteilhaft, wenn die Siebfläche kreisförmig ausgebildet ist.

Bei dieser Ausgestaltung kann es weiterhin besonders vorteilhaft sein, wenn der Reinigungskopf mittels zweier Lagerstreben an der Siebeinrichtung oder einem Gehäuse des Kühlsystems gelagert ist, wobei sich die Lagerstreben parallel zueinander sowie parallel zu einer von der Siebfläche definierten Siebebene erstrecken. Insbesondere können sich die Lagerstreben in radiale Richtung bezogen auf die Drehachse der Siebfläche erstrecken, wobei bevorzugt sich die Lagerstreben auf einander gegenüberliegenden Seiten der Drehachse verlaufen. Insbesondere können die parallel zu der Siebfläche gemessenen Abstände der Lagerstreben von der Drehachse in diametral entgegengesetzte Richtungen ausgehend von der Drehachse identisch sein. Bei dieser Ausgestaltung ist der Reinigungskopf, der an beiden Lagerstreben gelagert ist und sich entsprechend zwischen den Lagerstreben erstreckt, auf einem Radius der Siebfläche angeordnet. Eine solche Anordnung des Reinigungskopfs ist aus den oben genannten Gründen vorteilhaft.

Sofern der Reinigungskopf mittels der beschriebenen Lagerstreben gelagert ist, kann es weiterhin vorteilhaft sein, wenn die Erntemaschine eine weitere Strebe umfasst, die mit einer der Lagerstreben unmittelbar verbunden ist und deren Längsachse nicht-parallel zu den Längsachsen der Lagerstreben orientiert ist. Eine solche weitere Strebe ist besonders gut dazu geeignet, um das Gehäuse des Kühlsystems, an dem die Siebeinrichtung gelagert ist, zu öffnen. Hierbei wirkt die weitere Strebe gewissermaßen als Griff, der im Zuge einer Wartung der Siebeinrichtung und/oder des sonstigen Kühlsystems händisch gegriffen werden kann. Hierzu ist es besonders vorteilhaft, wenn die Siebeinrichtung zwecks Zugriffs auf einen Innenraum des Gehäuses, in dem typischerweise der Kühlkörper angeordnet ist, verschwenkbar an dem Gehäuse gelagert ist. Mittels der weiteren Strebe kann bei dieser Ausgestaltung die Siebeinrichtung besonders einfach relativ zu dem Gehäuse verschwenkt werden. Ein weiterer Vorteil der weiteren Strebe besteht darin, dass sie einen zusätzlichen Schutzbügel für die Siebfläche der Siebeinrichtung bildet.

Die Erfindung ist nachstehend anhand eines Ausführungsbeispiels, das in den Figuren dargestellt ist, näher erläutert. Es zeigt:
- Fig. 1:: Einen schematischen Querschnitt durch eine erfindungsgemäße Erntemaschine,
- Fig. 2:: Eine perspektivische Ansicht eines Kühlsystems der Erntemaschine gemäß Figur 1,
- Fig. 3:: Eine Darstellung des Kühlsystems gemäß Figur 2 in ihrer Anbindung an einen Radkasten der Erntemaschine gemäß Figur 1,
- Fig. 4:: eine weitere Darstellung des Kühlsystems in ihrer Anbindung an den Radkasten gemäß Figur 3.

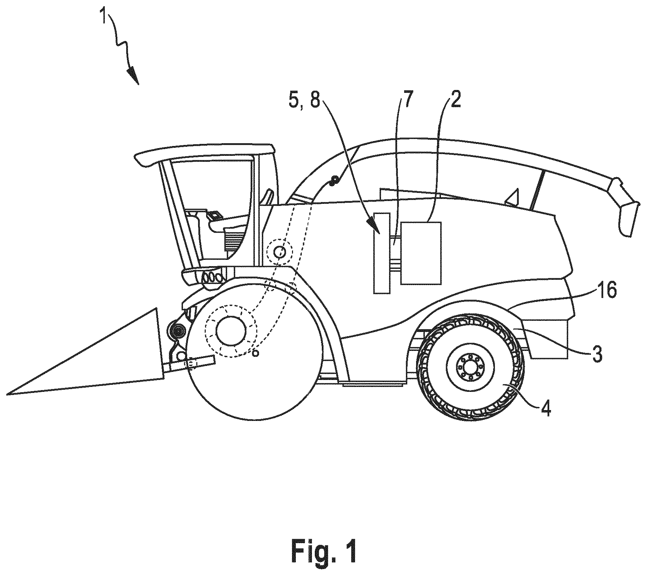

Ein Ausführungsbeispiel, das in den **Figuren 1 bis 4** dargestellt ist, umfasst eine erfindungsgemäße Erntemaschine **1,** die hier in Form eines selbstfahrenden Feldhäckslers ausgebildet ist. Die Erntemaschine **1** umfasst einen Antriebsmotor **2,** der hier von einer Verbrennungskraftmaschine gebildet ist. Ferner umfasst die Erntemaschine **1** insgesamt vier Räder **4,** die jeweils in einem Radkasten **3** angeordnet sind.

Zur Kühlung des Antriebsmotors **2** verfügt die Erntemaschine **1** ferner über ein Kühlsystem **5,** das einen Kühlkörper **6,** einen Kühlventilator **7** und eine Siebeinrichtung **8** umfasst. Der Kühlventilator **7** ist zwischen dem Antriebsmotor **2** und dem Kühlkörper **6** angeordnet und ist dazu vorgesehen und eingerichtet, einen Kühlluftstrom zu erzeugen, der jenseits des Kühlkörpers **6** angesaugt wird und im Zuge des Betriebs des Kühlventilators **7** den Kühlkörper **6** durchströmt und auf diese Weise an dem Kühlkörper **6** anstehende Wärme abführt. Um sowohl den Antriebsmotor **2** als auch den Kühlkörper **6** vor der Verschmutzung mit Schmutzpartikeln zu schützen, die im Zuge eines Ernteprozesses unweigerlich in der Luft angereichert sind, ist das Kühlsystem **5** mit der Siebeinrichtung **8** ausgestattet, die ein Siebelement umfasst. Letzteres kann beispielsweise von einem engmaschigen Siebgitter gebildet sein. Das Siebelement definiert eine Siebfläche **13,** die von dem Kühlluftstrom im Zuge eines Betriebs der Erntemaschine **1** durchströmt wird. Aufgrund der engmaschigen Ausbildung des Siebelements werden die in dem Kühlluftstrom mitgeführten Schmutzpartikel an der Siebfläche **13** abgeschieden und auf diese Weise von einem Weitertransport zu dem Kühlkörper **6** und/oder dem Antriebsmotor **2** abgehalten.

Um die Siebfläche **13** fortwährend abzureinigen, d.h. die Schmutzpartikel von der Siebfläche **13** abzunehmen, verfügt das Kühlsystem **5** ferner über eine Reinigungsvorrichtung **9.** Diese umfasst in dem gezeigten Beispiel ein Gebläse **10,** das in Form eines Sauggebläses ausgebildet ist. Als solches weist das Gebläse **10** eine Saugseite **18** und eine Druckseite **19** auf, wobei während eines Betriebs des Gebläses **10** an der Saugseite **18** ein Luftstrom angesaugt und an der Druckseite **19** abgegeben wird. Das Gebläse **10** ist mittels einer Reinigungsleitung **20** strömungstechnisch mit einem Reinigungskopf **12** verbunden, der unmittelbar der Siebeinrichtung **8** bzw. der Siebfläche **13** zugeordnet ist. Diese Zuordnung äußert sich darin, dass eine in den Figuren nicht dargestellte Wirkungsfläche des Reinigungskopfs **12** in unmittelbarer Nähe zu der Siebfläche **13** angeordnet ist. Aufgrund der Strömungsverbindung zwischen dem Gebläse **10** und dem Reinigungskopf **12** wird an der Wirkungsfläche des Reinigungskopfs **12** ein Reinigungsluftstrom **11** angesaugt, der dazu geeignet ist, an der Siebfläche **13** zurückgehalten Schmutzpartikel zu mobilisieren und in den Reinigungskopf **12** einzusaugen. Die Schmutzpartikel werden daraufhin entlang der Reinigungsleitung **20** zu dem Gebläse **10** gesaugt und ausgehend von dort an der Druckseite **19** des Gebläses **10** mittels einer Abluftleitung **14** abgeführt.

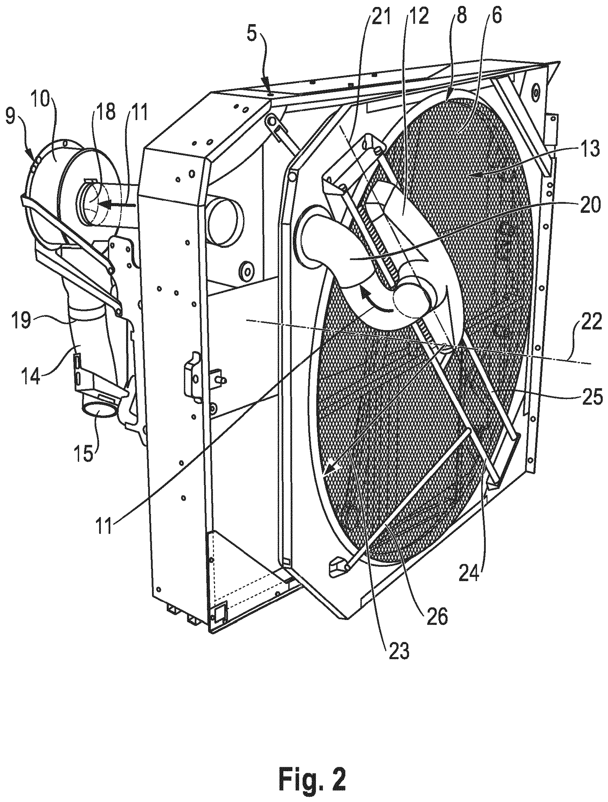

Wie sich insbesondere anhand von **Figur 2** ergibt, ist der Reinigungskopf **12** in dem gezeigten Beispiel langgestreckt ausgebildet und weist entsprechend eine Längsachse **21** auf. Die Siebeinrichtung **8** ist derart ausgebildet, dass das Siebelement, dass die Siebfläche **13** bildet, um eine Drehachse **22** drehantreibbar ist, wobei die Siebfläche **13** orthogonal zu der Drehachse **22** orientiert ist. Ferner ist das Siebelement als solches kreisförmig ausgebildet, sodass die Siebfläche **13** in Form einer Kreisfläche vorliegt. Der langgestreckte Reinigungskopf **12** weist eine parallel zu seiner Längsachse **21** gemessene Länge auf, die einem Radius **23** der Siebfläche **13** entspricht. Auf diese Weise ist der Reinigungskopf **12** dazu geeignet, in der in dem gezeigten Beispiel gezeigten Form die Siebfläche **13** in einem Bereich von der Drehachse **22** bis zu einem radial äußeren Rand des Siebelements zu überdecken. Auf diese Weise ist der Reinigungskopf **12** dazu geeignet, im Zuge eines Drehantriebs des Siebelements zyklisch mit der gesamten Siebfläche **13** zusammenzuwirken, die fortwährend relativ zu dem Reinigungskopf **12** bewegt wird, sodass sukzessive sämtliche Stellen der Siebfläche **13** den Reinigungskopf **12** passieren und abgereinigt werden.

Um die Wirkung des Reinigungsluftstroms **11** an dem Reinigungskopf **12** zu optimieren, ist die Reinigungsleitung **20** bezogen auf die Längsachse **21** des Reinigungskopfs **12** mittig an letzteren angeschlossen, wie sich insbesondere anhand von **Figur 2** ergibt.

In weiterhin bevorzugter Weise ist in dem gezeigten Beispiel der Reinigungskopf **12** mittels zweier Lagerstreben **24, 25** an der Siebeinrichtung **8** gelagert. Diese Lagerstreben **24, 25** erstrecken sich parallel zueinander sowie parallel zu der Siebfläche **13.** Ferner sind sie derart bezogen auf die Drehachse **22** angeordnet, dass sie sich beidseits der Drehachse **22** erstrecken, wobei ein parallel zu der Siebfläche **13** gemessener Abstand der einen Lagerstrebe **24** von der Drehachse **22** zumindest im Wesentlichen gleich ist zu einem gleichartig gemessenen Abstand zwischen der anderen Lagerstrebe **25** und der Drehachse **22.** Die beschriebene Anordnung der Lagerstreben **24, 25** hat den Vorteil, dass die Lagerung des Reinigungskopfs **12** besonders einfach derart erfolgen kann, dass die Längsachse **21** des Reinigungskopfs **12** entweder besonders nah an der Drehachse **22** des Siebelements vorbeiläuft oder idealerweise die Drehachse **22** schneidet. Auf diese Weise ist die radiale Anordnung des Reinigungskopfs **12** mit Blick auf die Siebfläche **13** besonders gut umsetzbar.

In weiterhin bevorzugter Weise umfasst die Erntemaschine **1** eine weitere Strebe **26,** die nicht-parallel zu den beiden Lagerstreben **24, 25** angeordnet ist. Die Strebe **26** ist besonders gut anhand von **Figur 2** erkennbar. Sie dient zum einen als Schutz des Siebelements bzw. der Siebfläche **13** vor Beschädigungen und zum anderen als Griff zur Öffnung der Siebeinrichtung **8.**

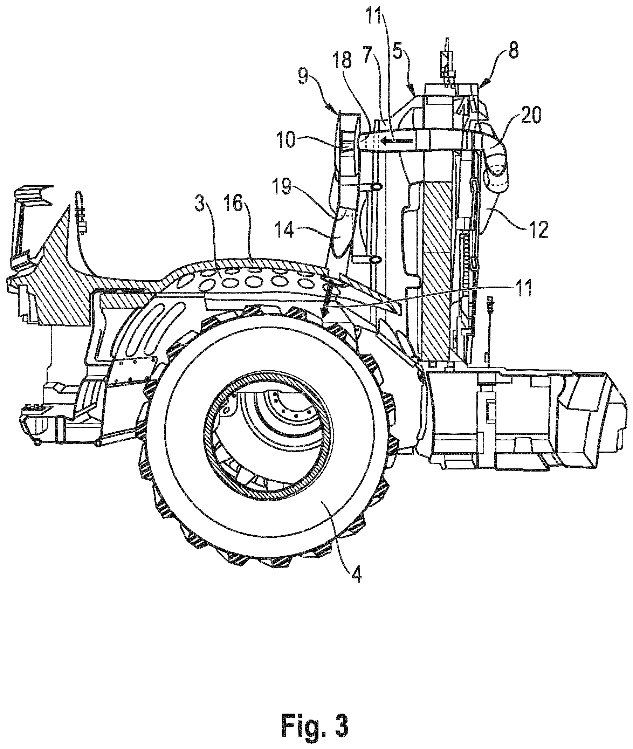

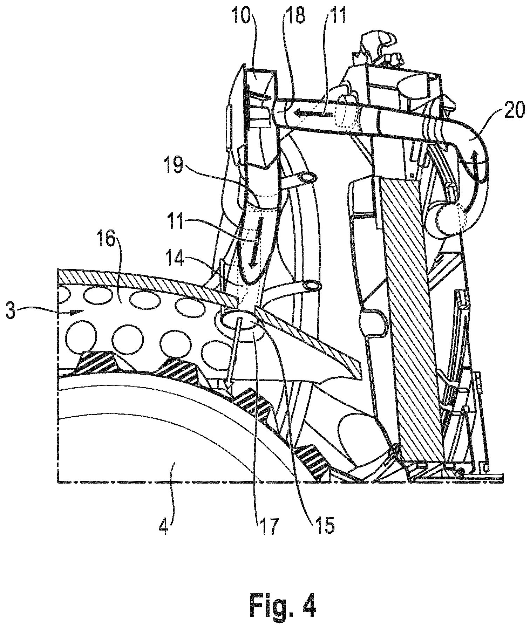

Die Abluftleitung **14,** die sich ausgehend von dem Gebläse **10** der Reinigungsvorrichtung **9** erstreckt, verläuft ausgehend von dem Gebläse **10** zu einem Radkasten **3** der Erntemaschine **1.** Dies ergibt sich besonders gut anhand der **Figuren 3** **und** **4****.** Zur Einleitung des Reinigungsluftstroms **11** in den Radkasten **3** weist ein Kotflügel **16** des Radkasten **3** eine entsprechende Aussparung **17** auf, die in ihrer Größe auf einen Austrittsquerschnitt **15** der Abluftleitung **14** angepasst ausgebildet ist. Auf diese Weise ist die Abluftleitung **14** dazu geeignet, den Reinigungsluftstrom **11** unmittelbar in den Radkasten **3** einzuleiten. In dem gezeigten Beispiel ist der Austrittsquerschnitt **15** zudem derart orientiert, dass der Reinigungsluftstrom **11** unmittelbar auf das in dem Radkasten **3** befindliche Rad **4** geleitet wird. Diese Ausgestaltung hat den besonderen Vorteil, dass der Reinigungsluftstrom **11** auch dann bedenkenlos erzeugt und abgeleitet werden kann, während sich die Erntemaschine **11** beispielsweise auf einer Straßenfahrt befindet. Die Leitung des Reinigungsluftstroms **11** auf eine Oberfläche des Rades **4** führt zu einer Abbremsung und ungerichteten Zerstreuung des Reinigungsluftstroms **11,** sodass von letzterem keine negativen Auswirkungen auf sonstige Elemente und/oder die Umwelt zu befürchten sind.

Bevorzugt endet die Abluftleitung **14** unmittelbar oberhalb des Kotflügels **16,** sodass eine direkte Verbindung zwischen beiden Bauteilen nicht besteht. Dies hat den Vorteil, dass der Kotflügel **16** unabhängig von der Abluftleitung **14** demontiert werden kann, die Einleitung des Reinigungsluftstroms **11** in den Radkasten 3 gleichwohl nicht behindert ist.

### Bezugszeichenliste

- 1: Erntemaschine
- 2: Antriebsmotor
- 3: Radkasten
- 4: Rad
- 5: Kühlsystem
- 6: Kühlkörper
- 7: Kühlventilator
- 8: Siebeinrichtung
- 9: Reinigungsvorrichtung
- 10: Gebläse
- 11: Reinigungsluftstrom
- 12: Reinigungskopf
- 13: Siebfläche
- 14: Abluftleitung
- 15: Austrittsquerschnitt
- 16: Kotflügel
- 17: Aussparung
- 18: Saugseite
- 19: Druckseite
- 20: Reinigungsleitung
- 21: Längsachse
- 22: Drehachse
- 23: Radius
- 24: Lagerstrebe
- 25: Lagerstrebe
- 26: Strebe

## Patentansprüche

1. Selbstfahrende Erntemaschine (1), insbesondere in Form eines Feldhäckslers, umfassend
- einen Antriebsmotor (2),
- eine Mehrzahl von jeweils in Radkästen (3) angeordneten Rädern (4),
- ein Kühlsystem (5) zur Kühlung des Antriebsmotors (2),
das Kühlsystem (5) umfassend
- einen Kühlkörper (6),
- einen Kühlventilator (7) zur Erzeugung eines Kühlluftstroms,
- eine dem Kühlkörper (6) vorgeordnete Siebeinrichtung (8),
- eine Reinigungsvorrichtung (9) zur Abreinigung der Siebeinrichtung (8),
wobei die Siebeinrichtung (8) dazu vorgesehen und eingerichtet ist, in dem Kühlluftstrom mitgeführte Schmutzpartikel zurückzuhalten und auf diese Weise an einer Weiterleitung zu dem Antriebsmotor (2) zu hindern,
wobei die Reinigungsvorrichtung (9) ein Gebläse (10) zur Erzeugung eines Reinigungsluftstroms (11) sowie einen mit dem Gebläse (10) strömungstechnisch verbundenen Reinigungskopf (12) umfasst,
wobei der Reinigungskopf (12) einer Siebfläche (13) der Siebeinrichtung (8) zugeordnet und derart nah an der Siebfläche (13) angeordnet ist, dass mittels des Reinigungsluftstroms (11) von der Siebfläche (13) abgelöste Schmutzpartikel in den Reinigungskopf (12) eingeleitet und sodann von der Siebfläche (13) abgeführt werden können,
**dadurch gekennzeichnet, dass**
die Reinigungsvorrichtung (9) eine Abluftleitung (14) umfasst, die dazu eingerichtet und vorgesehen ist, den mit abgelösten Schmutzpartikeln beladenen Reinigungsluftstrom (11) in einen der Radkästen (3) zu leiten.

2. Erntemaschine (1) nach Anspruch 1, **dadurch gekennzeichnet, dass** die Abluftleitung (14) in unmittelbarer Nähe oberhalb eines Kotflügels (16) des Radkastens (3) endet, wobei der Kotflügel (16) eine der Abluftleitung (14) örtlich zugeordnete Aussparung (17) aufweist, deren Querschnitt vorzugsweise zumindest im Wesentlichen einem Austrittsquerschnitt (15) der Abluftleitung (14) entspricht, sodass der aus dem Austrittsquerschnitt (15) austretende Reinigungsluftstrom (11) durch die Aussparung (17) hindurch in den Radkasten (3) einströmen kann.

3. Erntemaschine (1) nach Anspruch 2, **dadurch gekennzeichnet, dass** der Kotflügel (16) demontierbar ist, wobei die Abluftleitung (14) derart getrennt von dem Kotflügel (16) ausgebildet ist, dass sie von einer Demontage des Kotflügels (16) nicht tangiert wird.

4. Erntemaschine (1) nach einem der vorhergehenden Ansprüche, **dadurch gekennzeichnet, dass** die Abluftleitung (14) derart relativ zu dem in dem Radkasten (3) angeordneten Rad (4) ausgerichtet ist, dass der durch einen Austrittsquerschnitt (15) der Abluftleitung (14) austretende Reinigungsluftstrom (11) auf das Rad (4) gerichtet ist.

5. Erntemaschine (1) nach einem der vorhergehenden Ansprüche, **dadurch gekennzeichnet, dass** das Gebläse (10) von einem Sauggebläse gebildet ist, wobei der Reinigungskopf (12) einer Saugseite (18) des Gebläses (10) zugeordnet ist, sodass mittels der Reinigungsvorrichtung (9) Schmutzpartikel von der Siebfläche (13) der Siebeinrichtung (8) absaugbar sind, wobei die Abluftleitung (14) einer Druckseite (19) des Gebläses (10) zugeordnet ist.

6. Erntemaschine (1) nach Anspruch 5, **dadurch gekennzeichnet, dass** der Reinigungskopf (12) eine langgestreckte Form aufweist, wobei vorzugsweise eine Reinigungsleitung (20), die den Reinigungskopf (12) strömungstechnisch mit dem Gebläse (10) verbindet, bezogen auf eine Längsachse (21) des Reinigungskopfs (12) mittig an den Reinigungskopf (12) angeschlossen ist.

7. Erntemaschine (1) nach einem der vorhergehenden Ansprüche, **dadurch gekennzeichnet, dass** zumindest die Siebfläche (13) der Siebeinrichtung (8) um eine Drehachse (22) drehantreibbar ausgebildet ist, wobei der Reinigungskopf (12) derart feststehend nah an der Siebfläche (13) angeordnet ist, dass im Zuge ihres Drehantriebs der Reinigungskopf (12) zumindest im Wesentlichen mit der gesamten Siebfläche (13) der Siebeinrichtung (8) in Wirkeingriff gerät.

8. Erntemaschine (1) nach den Ansprüchen 5 und 7, **dadurch gekennzeichnet, dass** sich der Reinigungskopf (12) radial bezogen auf die Drehachse (22) der Siebeinrichtung (8) erstreckt, wobei vorzugsweise der Reinigungskopf (12) zumindest im Wesentlichen entlang eines gesamten Radius (23) der Siebfläche (13) mit letzterer zusammenwirkt.

9. Erntemaschine (1) nach Anspruch 8, **dadurch gekennzeichnet, dass** der Reinigungskopf (12) mittels zweier, parallel zueinander sowie parallel zu der Siebfläche (13) orientierter Lagerstreben (24, 25) gelagert ist.

10. Erntemaschine (1) nach Anspruch 9, **gekennzeichnet durch** mindestens eine weitere Strebe (26), die mit einer der der Lagerstreben (24) unmittelbar verbunden ist und deren Längsachse nicht-parallel zu Längsachsen der Lagerstreben (24, 25) orientiert ist.

## Claims

1. A self-propelled harvesting machine (1), in particular in the form of a forage harvester, comprising
- a propulsion engine (2),
- a plurality of wheels (4) disposed in respective wheel arches (3),
- a cooling system (5) for cooling the propulsion engine (2),
the cooling system (5) comprising
- a cooling element (6),
- a cooling fan (7) for producing a cooling air flow,
- a screen device (8) disposed upstream of the cooling element (6),
- a cleaning device (9) for cleaning off the screen device (8),
wherein the screen device (8) is provided and configured to retain particles of dirt entrained in the cooling air flow and prevent them in this manner from being transferred to the propulsion engine (2),
wherein the cleaning device (9) comprises a blower (10) for producing a flow of cleaning air (11) as well as a cleaning head (12) which is fluidically connected to the blower (10),
wherein the cleaning head (12) is associated with a screen surface (13) of the screen device (8) and is disposed close to the screen surface (13) in a manner such that particles of dirt detached from the screen surface (13) by means of the flow of cleaning air (11) can be introduced into the cleaning head (12) and thereafter removed from the screen surface (13),
**characterized in that**
the cleaning device (9) comprises an exhaust air line (14) which is configured and provided so as to conduct the flow of cleaning air (11) loaded with detached particles of dirt into one of the wheel arches (3).

2. The harvesting machine (1) according to claim 1, **characterized in that** the exhaust air line (14) ends in the immediate vicinity of and above a fender (16) of the wheel arch (3), wherein the fender (16) has a recess (17) which is spatially associated with the exhaust air line (14), the cross section of which recess preferably at least substantially corresponding to an outlet cross section (15) of the exhaust air line (14), so that the flow of cleaning air (11) exiting the outlet cross section (15) can flow through the recess (17) into the wheel arch (3).

3. The harvesting machine (1) according to claim 2, **characterized in that** the fender (16) is detachable, wherein the exhaust air line (14) is constructed separately from the fender (16) in a manner such that it is not affected by a detachment of the fender (16).

4. The harvesting machine (1) according to one of the preceding claims, **characterized in that** the exhaust air line (14) is orientated relative to the wheel (4) disposed in the wheel arch (3) in a manner such that the flow of cleaning air (11) exiting through an outlet cross section (15) of the exhaust air line (14) is directed onto the wheel (4).

5. The harvesting machine (1) according to one of the preceding claims, **characterized in that** the blower (10) is formed by a suction blower, wherein the cleaning head (12) is associated with an intake side (18) of the blower (10), so that particles of dirt can be suctioned from the screen surface (13) of the screen device (8) by means of the cleaning device (9), wherein the exhaust air line (14) is associated with a pressure side (19) of the blower (10).

6. The harvesting machine (1) according to claim 5, **characterized in that** the cleaning head (12) has an elongated shape, wherein preferably, a cleaning line (20) which fluidically connects the cleaning head (12) to the blower (10) is centrally connected to the cleaning head (12) with respect to a longitudinal axis (21) of the cleaning head (12).

7. The harvesting machine (1) according to one of the preceding claims, **characterized in that** at least the screen surface (13) of the screen device (8) is constructed to be drivable in rotation about an axis of rotation (22), wherein the cleaning head (12) is disposed in a fixed position close to the screen surface (13) in a manner such that, during the course of its rotational operation, the cleaning head (12) comes into operational engagement with at least substantially the entire screen surface (13) of the screen device (8).

8. The harvesting machine (1) according to claims 5 and 7, **characterized in that** the cleaning head (12) extends radially with respect to the axis of rotation (22) of the screen device (8), wherein preferably, the cleaning head (12) cooperates with the screen surface (13) along at least substantially an entire radius (23) thereof.

9. The harvesting machine (1) according to claim 8, **characterized in that** the cleaning head (12) is mounted by means of two mounting struts (24, 25) which are orientated parallel with respect to each other as well as parallel to the screen surface (13).

10. The harvesting machine (1) according to claim 9, **characterized by** at least one further strut (26) which is directly connected to one of the mounting struts (24) and the longitudinal axis of which is orientated in a manner which is not parallel to the longitudinal axes of the mounting struts (24, 25).

## Revendications

1. Machine de récolte (1) automotrice, notamment sous la forme d'une ramasseuse-hacheuse, comprenant
- un moteur d'entraînement (2),
- une pluralité de roues (4) disposées respectivement dans des passages de roue (3),
- un système de refroidissement (5) destiné à refroidir le moteur d'entraînement (2),
le système de refroidissement (5) comportant
- un corps de refroidissement (6),
- un ventilateur de refroidissement (7) destiné à générer un flux d'air de refroidissement,
- un dispositif de tamis (8) placé en amont du corps de refroidissement (6),
- un dispositif de nettoyage (9) destiné à nettoyer le dispositif de tamis (8),
le dispositif de tamis (8) étant prévu et conçu pour retenir des particules de saletés entraînées dans le flux d'air de refroidissement et les empêcher ainsi d'être transmises jusqu'au moteur d'entraînement (2),
le dispositif de nettoyage (9) comprenant un ventilateur (10) pour générer un flux d'air de refroidissement (11), ainsi qu'une tête de nettoyage reliée au ventilateur (10) sur le plan de la technique d'écoulement,
la tête de nettoyage (12) étant associée à une surface de tamisage (13) du dispositif de tamis (8) et étant disposée si près de la surface de tamisage (13) que des particules de saletés détachées de la surface de tamisage par le flux d'air de nettoyage (11) peuvent être introduites dans la tête de nettoyage (12) et ensuite être évacuées de la surface de tamisage (13),
**caractérisée en ce que**
le dispositif de nettoyage (9) comprend une conduite d'évacuation d'air (14) qui est conçue et prévue pour diriger le flux d'air de nettoyage (11) chargé en particules de saletés détachées vers l'un des passages de roue (3).

2. Machine de récolte (1) selon la revendication 1, **caractérisée en ce que** la conduite d'évacuation d'air (14) se termine à proximité immédiate au-dessus d'une aile (16) du passage de roue (3), l'aile (16) présentant un évidement (17) qui est associé localement à la conduite d'évacuation d'air (14) et dont la section correspond de préférence au moins pour l'essentiel à une section de sortie (15) de la conduite d'évacuation d'air (14), de sorte que le flux d'air de nettoyage (11) sortant de la section de sortie (15) peut passer par l'évidement (17) et entrer dans le passage de roue (3).

3. Machine de récolte (1) selon la revendication 2, **caractérisée en ce que** l'aile (16) peut être démontée, la conduite d'évacuation d'air (14) étant réalisée séparément de l'aile (16) de manière à ne pas être impactée par un démontage de l'aile (16).

4. Machine de récolte (1) selon une des revendications précédentes, **caractérisée en ce que** la conduite d'évacuation d'air (14) est orientée par rapport à la roue (4) disposée dans le passage de roue (3), de manière à ce que le flux d'air de nettoyage (11) sortant à travers une section de sortie (15) de la conduite d'évacuation d'air (14) soit dirigé sur la roue (4).

5. Machine de récolte (1) selon une des revendications précédentes, **caractérisée en ce que** le ventilateur (10) est constitué d'un ventilateur aspirant, la tête de nettoyage (12) étant associée à un côté aspirant (18) du ventilateur (10), de sorte que des particules de saletés peuvent être aspirées depuis la surface de tamisage (13) du dispositif de tamis (8) à l'aide du dispositif de nettoyage (9), la conduite d'évacuation d'air (14) étant associée à un côté refoulement (19) du ventilateur (10).

6. Machine de récolte (1) selon la revendication 5, **caractérisée en ce que** la tête de nettoyage (12) présente une forme allongée, sachant qu'une conduite de nettoyage (20), reliant la tête de nettoyage (12) au ventilateur (10) du point de vue de la technique d'écoulement, est de préférence raccordée de manière centrée à la tête de nettoyage (12), rapporté à un axe longitudinal (21) de la tête de nettoyage (12).

7. Machine de récolte (1) selon une des revendications précédentes, **caractérisée en ce qu'**au moins la surface de tamisage (13) du dispositif de tamis (8) est réalisée de manière à pouvoir être entraînée en rotation autour d'un axe de rotation (22), la tête de nettoyage (12) étant disposée de façon stationnaire si près de la surface de tamisage (13) que dans le cadre de l'entraînement en rotation de celle-ci, la tête de nettoyage (12) entre du moins pour l'essentiel en interaction fonctionnelle avec la totalité de la surface de tamisage (13) du dispositif de tamis (8).

8. Machine de récolte (1) selon les revendications 5 et 7, **caractérisée en ce que** la tête de nettoyage (12) s'étend radialement par rapport à l'axe de rotation (22) du dispositif de tamis (8), la tête de nettoyage (12) coopérant avec la surface de tamisage (13), de préférence au moins pour l'essentiel le long d'un rayon (23) total de celle-ci.

9. Machine de récolte (1) selon la revendication 8, **caractérisée en ce que** la tête de nettoyage (12) est montée à l'aide de deux bras de support (24, 25) qui sont orientés parallèlement l'un à l'autre et parallèlement à la surface de tamisage (13).

10. Machine de récolte (1) selon les revendications 9, **caractérisée en ce qu'**elle présente au moins un bras (26) supplémentaire qui est relié directement à l'un des bras de support (24) et dont l'axe longitudinal est orienté de manière non parallèle à des axes longitudinaux des bras de support (24, 25).
